# EUROPEAN PATENT APPLICATION

(11) **EP 4 629 523 A1**
(43) Date of publication of application: **08.10.2025**
(21) Application number: 24221476.5
(22) Date of filing: 19.12.2024
(51) Int. Cl.: H04B 7/06, H04W 36/08, H04W 76/25

(54) **NON-VOLATILE COMPUTER READABLE MEDIA AND METHOD FOR BEAM SEARCHING**

(30) Priority: 03.04.2024 TW 113112629
(71) Applicant: Wistron Corp., New Taipei City 22181 (TW)
(72) Inventor: LEE, Kuan Yi, 22181 New Taipei City (TW); HSIEH, Chwu Wuang, 22181 New Taipei City (TW)
(74) Representative: Patentship Patentanwaltsgesellschaft mbH

(57) **Abstract**

A method for beam searching suitable for user equipment (UE) is provided. The UE stores a cell identity (ID) and a synchronization signal block (SSB) of a previous network connection with a previously connected base station. The method includes the following steps. A reconnection to a first base station is performed (S 100). The cell ID and the SSB of the previous network connection with the previously connected base station are read (S 102). Information of the cell ID and the SSB is transmitted to the first base station via a physical random access channel (PRACH) (S104). An initial access to the first base station is performed by the UE through the cell ID and the SSB (S108) in response to the cell ID in the PRACH received by the first base station matching a preset cell ID configured by the previously connected base station (S106).

## Description

### TECHNICAL FIELD

The present disclosure relates to a beam management method, and, in particular, to a fast beam searching method and a communication system thereof.

### BACKGROUND OF THE DISCLOSURE

A beam management process is used in 5G New Radio (NR) Frequency Range 2 (FR2) to obtain and maintain a set of beams that can be used for downlink (DL) and uplink (UL) transmission/reception of Transmission Reception Points (TRxP) and/or user equipment (UE). The beam management process of 5G new wireless includes beam scanning, beam measurement, beam decision, and beam reporting. Beam scanning refers to the covering of an area of space with a set of beams sent and received at pre-specified intervals and directions. After the UE completes the beam measurement, beam determination, and beam reporting processes, the base station (such as a gNB) can configure the UE's uplink and downlink beams through a synchronization signal block (SSB) based on the report results from the UE.

However, when the UE is in an initial access, the base station performs beam scanning from the first SSB to the last SSB to select the best beam to synchronize the UE, but this process wastes time and power of the TRxP and the UE.

### BRIEF SUMMARY OF THE DISCLOSURE

An embodiment of the present disclosure provides a method for beam searching that is suitable for use by a user equipment (UE). The UE stores a cell identity (ID) and a synchronization signal block (SSB) of a previous network connection with a previously connected base station. The method includes the following steps. A reconnection to a first base station is performed. The cell ID and the SSB of the previous network connection with the previously connected base station are read. Information of the cell ID and the SSB is transmitted to the first base station via a physical random access channel (PRACH). Initial access to the first base station is performed by the UE through the cell ID and the SSB in response to the cell ID in the PRACH received by the first base station matching a preset cell ID configured by the previously connected base station.

An embodiment of the present disclosure also provides a method for beam searching. The method includes the following steps. A plurality of synchronization signal blocks (SSBs) transmitted by a base station are detected. The SSBs correspond to different respective beam directions, and their beam widths may or may not be all the same. The received signal strength of each SSB is measured. At least one of the SSBs is selected according to the received signal strength, the beam width, or both. A physical random access channel (PRACH) is used to transmit information of said SSB to the base station. Initial access to the base station is performed through said SSB.

An embodiment of the present disclosure also provides a non-transitory computer readable medium storing one or more instructions for execution by one or more processors of UE in network connection with a base station. The one or more instructions includes the following actions. A reconnection of the UE to a first base station is performed. The cell ID and the SSB of the previous network connection with a previously connected base station are read. Information of the cell ID and the SSB is transmitted to the first base station via a physical random access channel (PRACH). Initial access to the first base station is performed by the UE through the cell ID and the SSB in response to the cell ID in the PRACH received by the first base station matching a preset cell ID configured by the previously connected base station.

### BRIEF DESCRIPTION OF THE DRAWINGS

The disclosure can be more fully understood by reading the subsequent detailed description with references made to the accompanying figures. The figures illustrate exemplary embodiments of the disclosure and, together with the description, serve to explain the principles of the disclosure.
FIG. 1 is a flow chart of a method for beam searching in accordance with some embodiments of the present disclosure.
FIG. 2 is a flow chart of a method for beam searching in accordance with some embodiments of the present disclosure.
FIG. 3 is a flow chart of a method for beam searching in accordance with some embodiments of the present disclosure.
FIG. 4 is a schematic diagram of a communication system 400 executing the method for beam searching in FIG. 2 in accordance with some embodiments of the present disclosure.
FIG. 5A and FIG. 5B are schematic diagrams of a communication system 500 executing the method for beam searching in FIG. 3 in accordance with some embodiments of the present disclosure.

### DETAILED DESCRIPTION OF THE DISCLOSURE

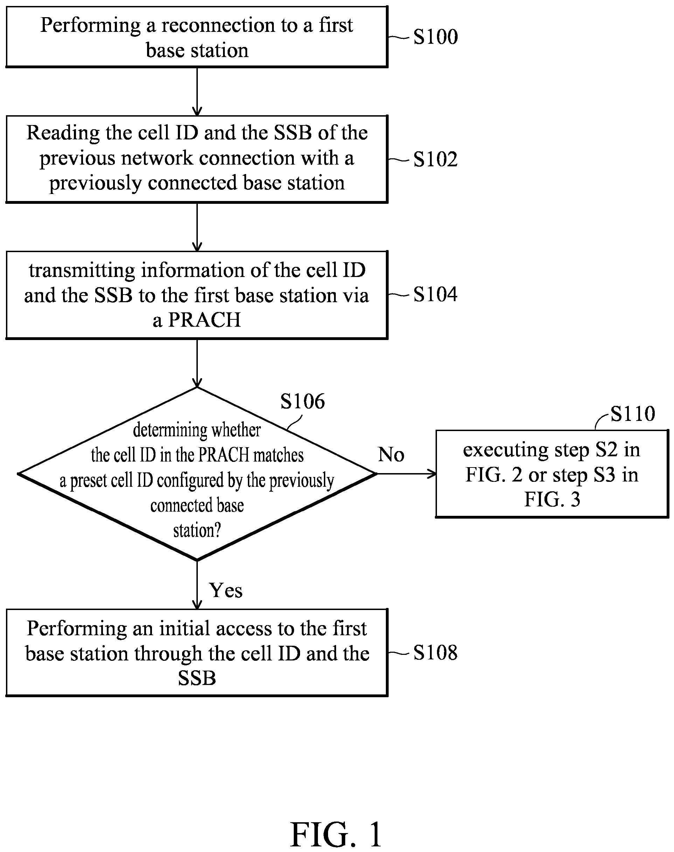

FIG. 1 is a flow chart of a method for beam searching in accordance with some embodiments of the present disclosure. The method for beam searching of the present disclosure is suitable to UE. In some embodiments, the UE may be, for example, a laptop, a tablet, and a smart phone, but the present disclosure is not limited thereto. In some embodiments of FIG. 1, the UE stores a cell ID and a synchronization signal block (SSB) of a previous network connection with a previously connected base station. In some embodiments, the previously connected base station may be, for example, a 5Gbase station, such as a gNB, but the present disclosure is not limited thereto. The method for beam searching includes the following steps. A reconnection to a first base station is performed (step S100). The cell ID and the SSB of the previous network connection with the previously connected base station are read (step S102). Information of the cell ID and the SSB is transmitted to the first base station via a physical random access channel (PRACH) (step S104). The first base station determines whether the cell ID in the PRACH matches a preset cell ID that is configured by the previously connected base station (step S106). An initial access to the first base station is performed by the UE through the cell ID and the SSB in response to the cell ID matching the preset cell ID (step S108).

In steps S100 and S102, the cell ID and the SSB of the previous network connection with the previously connected base station for the UE are stored in a non-volatile memory. Therefore, after the UE completes a restart, the UE can still read the cell ID and the SSB used for the previous network connection with the previously connected base station. In some embodiments, if the UE does not execute the restart, but only turns off and then turns on its network function or the UE is moved from a location without network service to a location with network service, then the cell ID and the SSB of the previous network connection with the previously connected base station for the UE can be stored in a volatile memory of the UE, but the present disclosure is not limited thereto.

In some embodiments, the SSB includes a primary synchronization signal (PSS), a secondary synchronization signal (SSS), a physical broadcast channel (PBCH), and a demodulation reference signal (DMRS). The DMRS associated with the PBCH is used to estimate Reference Signal Received Power (RSRP). The RSRP is calculated based on the SSB received by the UE in a beam measurement phase, and the best beam for the UE is selected in a beam determination phase.

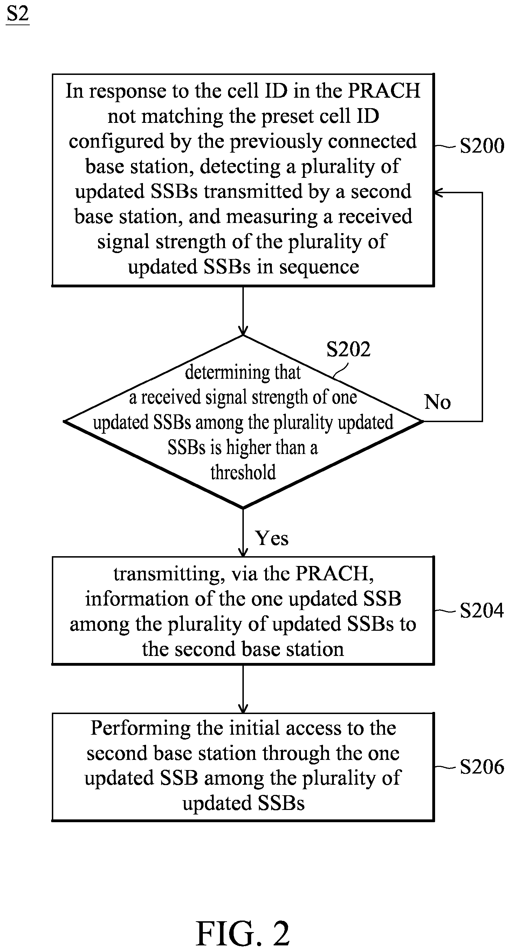

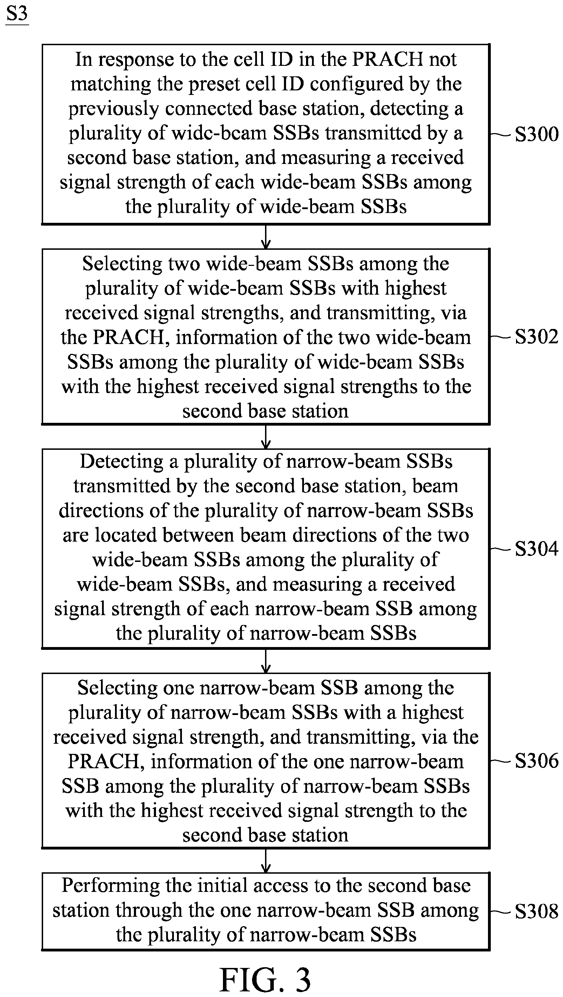

In steps S104 and S106, after the first base station receives information of the cell ID and the SSB in the PRACH transmitted by the UE in step S104, the first base station determines whether the cell ID in the PRACH matches a preset cell ID configured by the previously connected base station. Since the UE transmits the information of the cell ID and the SSB to all nearby base stations via the PRACH, only the first base station recognizes that the cell ID from the UE matches the preset cell ID configured by the previously connected base station (that is, the answer in step S 106 is "Yes"), the first base station configures the UE, so that the UE can perform step S108. In some embodiments of FIG. 1, the method for beam searching of the present disclosure further includes the following steps. In response to the cell ID in the PRACH not matching the preset cell ID (that is, the answer in step S 106 is "No"), the method for beam searching of the present disclosure executes step S2 in FIG. 2 or step S3 in FIG. 3 (step S 110). Steps S100 to S108 in FIG. 1 omit the beam scanning phase, allowing the UE to quickly complete initial access to the base station.

FIG. 2 is a flow chart of a method for beam searching in accordance with some embodiments of the present disclosure. The method for beam searching of the present disclosure includes the following steps. In response to the cell ID in the PRACH not matching the preset cell ID configured by the previously connected base station, a plurality of updated SSBs transmitted by a second station are detected, and a received signal strength of the updated SSBs is measured in sequence (step S200). It is determined that a received signal strength of one updated SSB among the plurality of updated SSBs is higher than a threshold (step S202). If the received signal strength of the one updated SSB among the plurality of updated SSBs is higher than the threshold (that is, the answer in step S202 is "Yes"), information of the one updated SSB among the plurality of updated SSBs is transmitted to the second base station via the PRACH (step S204). The initial access to the second base station is performed through the one updated SSB among the plurality of updated SSBs (step S206). If the received signal strength of the one updated SSB among the plurality of updated SSBs is not higher than the threshold (that is, the answer in step S202 is "No"), the method for beam searching of the present disclosure continues to execute step S200. In step S200, the second base station transmits a plurality of updated SSBs at each time interval (for example, 20 milliseconds). Each updated SSB corresponds to different beam directions, and the SSB has a beam width that may be the same, or it may be different. The received signal strength may be, for example, the RSRP, but the present disclosure is not limited thereto.

In step S202, the threshold may be, for example, -90dbm, but the present disclosure is not limited thereto. In some embodiments, the threshold may be equal to the minimum receiver sensitivity of the UE plus a definition threshold. The minimum receiver sensitivity refers to the minimum signal strength that a product antenna can receive from the network. If it is lower than this strength, a product will not receive the signal. The definition threshold is defined based on an RF performance of the product. In step S202, the UE selects the first updated SSB that exceeds the threshold. Through this approach, it can avoid measuring all updated SSBs. As long as one updated SSB among the plurality of updated SSBs exceeds the threshold during the sequential measurement of the updated SSBs, information of the one updated SSB among the plurality of updated SSBs is transmitted to the second base station. After the method for beam searching (or the UE) completes step S204, the second base station configures the UE according to the one updated SSB reported by the UE, so that the UE can perform step S206 accordingly.

In some embodiments of step S202, in response to measuring the received signal strength of the one updated SSB among the plurality of updated SSBs in sequence and determining that the received signal strength of the one updated SSB is higher than the threshold, the UE immediately determines that the received signal strength of the one updated SSB is higher than the threshold, without measuring remaining updated SSBs among the plurality of updated SSBs.

In some embodiments, steps S200~S206 in FIG. 2 can be independent of steps S100~S108 in FIG. 1. In other words, there is no need to respond to the mismatch between the cell ID in the PRACH and the preset cell ID in step S106 of FIG. 1. The method for beam searching can directly execute steps S200~S206 of FIG. 2. In some embodiments, step S200 may correspond to the beam scanning and beam measurement phases. Step S202 may correspond to the beam determination phase. Step S204 may correspond to the beam reporting phase.

FIG. 3 is a flow chart of a method for beam searching in accordance with some embodiments of the present disclosure. The method for beam searching of the present disclosure includes the following steps. In response to the cell ID in the PRACH not matching the preset cell ID configured by the previously connected base station, a plurality of wide-beam SSBs transmitted by a second base station are detected, and the received signal strength of each wide-beam SSB is measured (step S300). Two wide-beam SSBs among the plurality of wide-beam SSBs with the highest received signal strengths are selected, and information of the two wide-beam SSBs among the plurality of wide-beam SSBs with the highest received signal strengths is transmitted to the second base station via the PRACH (step S302). A plurality of narrow-beam SSBs transmitted by the second base station are detected. Beam directions of the plurality of the narrow-beam SSBs are located between beam directions of the two wide-beam SSBs among the plurality of wide-beam SSBs, and a received signal strength of each narrow-beam SSB among the plurality of narrow-beam SSBs is measured (step S304). One narrow-beam SSB among the plurality of narrow-beam SSBs with the highest received signal strength is selected, and information of the one narrow-beam SSB among the plurality of narrow-beam SSB with the highest received signal strength is transmitted to the second base station (step S306). The initial access to the second base station is performed through the one narrow-beam SSB (step S308). In steps S300 and S304, the second base station transmits a plurality of wide-beam SSBs and a plurality of narrow-beam SSBs at each time interval (for example, 20 milliseconds).

In step S302, the method for beam searching of the present disclosure selects the two wide-beam SSBs among the plurality of wide-beam SSBs with the highest received signal strengths. The two wide-beam SSBs among the plurality of wide-beam SSBs with the highest received signal strengths are used to determine a coarse direction of the beam based on the relative position between the UE and the second base station. After the coarse direction is determined, the method for beam searching of the present disclosure measures the received signal strength of the plurality of narrow-beam SSBs in step S304. The beam directions of the plurality of narrow-beam SSBs are located between the beam directions of the two wide-beam SSBs among the plurality of wide-beam SSBs. In step S306, the method for beam searching of the present disclosure selects one narrow-beam SSB among the plurality of narrow-beam SSB with the highest received signal strength to determine a fine direction. After step S306 is completed, the second base station configures the UE according to the one narrow-beam SSB reported by the UE, so that the UE can perform step S308 accordingly.

In some embodiments, steps S300~S308 in FIG. 3 can be independent of steps S100~S108 in FIG. 1. In other words, there is no need to respond to the mismatch between the cell ID in the PRACH and the preset cell ID in step S106 of FIG. 1. The method for beam searching can directly execute steps S300~S308 of FIG. 3. In some embodiments, steps S300 and S304 may correspond to the beam scanning and beam measurement phases. Steps S302 and S306 may correspond to the beam determination phase. Steps S302 and S306 may correspond to the beam reporting phase.

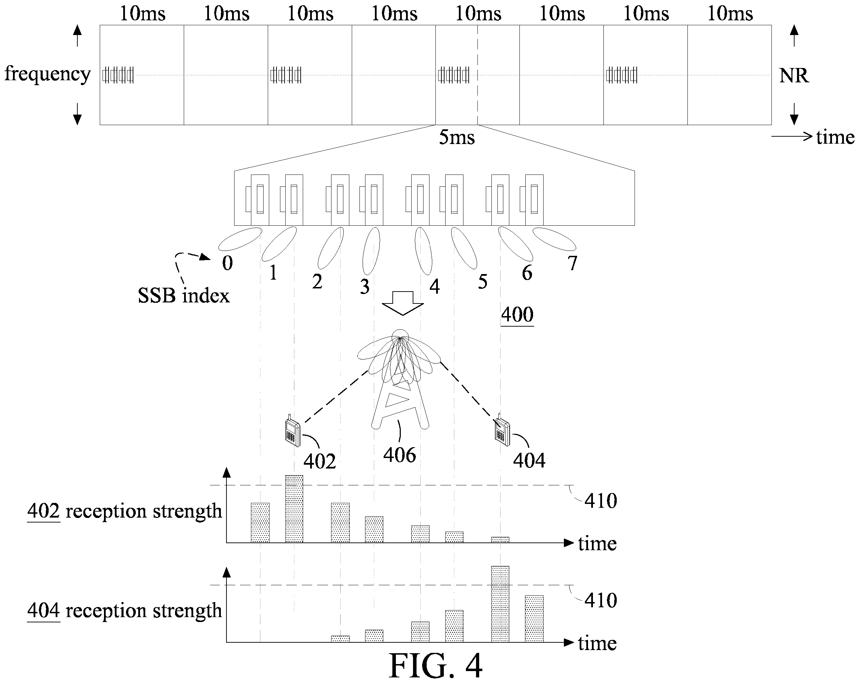

FIG. 4 is a schematic diagram of a communication system 400 executing the method for beam searching in FIG. 2 in accordance with some embodiments of the present disclosure. Some embodiments in FIG. 4 are a scenario applied to 5G New Radio (NR). As shown in FIG. 4, the communication system 400 includes a UE 402, a UE 404, and a base station 406. In some embodiments, the UE 402 and the UE 404 may be, for example, laptops, tablets, and smart phones, but the present disclosure is not limited thereto. The base station 406 may be, for example, a 5G base station, such as a gNB. The base station 406 transmits a plurality of SSBs to the UE 402 and the UE 404 every 20 milliseconds. As shown in FIG. 4, the base station 406 transmits 4 sets of SSBs to the UE 402 and the UE 404 within 80 milliseconds. Taking the third set of SSBs from left to right as an example, the third set of SSBs includes 8 SSBs within 5 milliseconds, which respectively correspond to SSB indexes 0~7 in sequence. Each SSB in the third set of SSBs corresponds to different beam directions.

When the UE 402 and the UE 404 receive the SSBs with SSB indexes 0~7, the UE 402 and the UE 404 measure received signal strengths of the SSBs with SSB indexes 0~7 in sequence. In some embodiments, the received signal strengths may be the RSRP. For example, when the UE 402 measures that the received signal strength of the SSB with SSB index 1 is higher than a threshold 410, the UE 402 does not need to continue to measure the received signal strengths of subsequent SSB indexes 2~7. The UE 402 selects the SSB with SSB index 1, and transmits information of the SSB with SSB index 1 to the base station 406 via the PRACH. After the base station 406 receives the information of the SSB with SSB index 1, the base station 406 configures the UE 402, so that the UE 402 performs an initial access to the base station 406 through the SSB with SSB index 1.

Similarly, after completing the measurement of SSB received signal strengths of the SSBs with SSB indexes 0~5, if the UE 404 measures that the received signal strength of the SSB with SSB index 6 is higher than the threshold 410, the UE 404 does not need to continue to measure the received signal strength of the subsequent SSB index 7. The UE 402 selects the SSB with SSB index 6, and transmits information of the SSB with SSB index 6 to the base station 406 via the PRACH. After the base station 406 receives the information of the SSB with SSB index 6, the base station 406 configures the UE 404, so that the UE 404 performs the initial access to the base station 406 through the SSB with SSB index 6. In some embodiments, the threshold 410 may be, for example, -90dBm, but the present disclosure is not limited thereto. In some embodiments, in response to measuring the received signal strength of the SSB with SSB index 6 among the plurality of SSBs with in sequence and determining that the received signal strength of the SSB with SSB is higher than the threshold, the UE 402 immediately determines that the received signal strength of the SSB with SSB index 6 is higher than the threshold without measuring remaining SSBs among the plurality of SSBs.

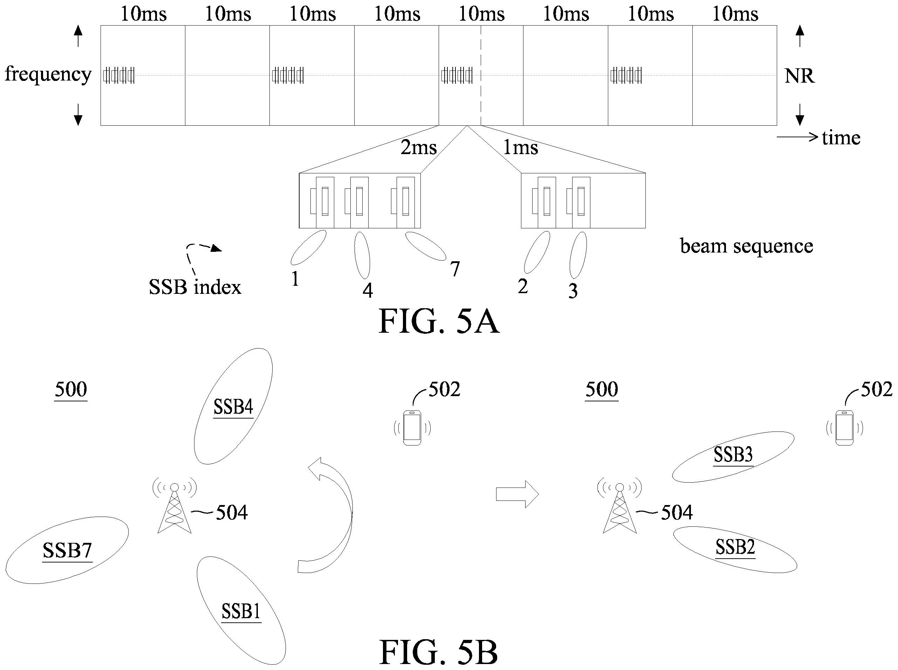

FIG. 5A and FIG. 5B are schematic diagrams of a communication system 500 executing the method for beam searching in FIG. 3 in accordance with some embodiments of the present disclosure. Some embodiments in FIGS. 5A and 5B are a scenario applied to 5G New Radio (NR). As shown in FIG. 5B, the communication system 500 includes a UE 502 and a base station 504. In some embodiments, the UE 502 may be, for example, a laptop, a tablet, and a smart phone, but the present disclosure is not limited thereto. The base station 504 may be, for example, a 5G base station, such as a gNB. In FIG. 5A, the base station 504 transmits a plurality of SSBs to the UE 502 every 20 milliseconds. As shown in FIG. 5A, the base station 504 transmits 4 sets of SSBs to the UE 502 within 80 milliseconds. Taking the third set of SSBs from left to right as an example, the third set of SSBs includes 3 SSBs within 2 milliseconds, which respectively correspond to SSB indexes 1, 4, 7, 2, and 3 in sequence. That is, each SSB in the third set of SSBs corresponds to different beam directions. In some embodiments of FIG. 5A, the SSBs with SSB indexes 1, 4, and 7 are wide-beam SSBs. The SSBs with SSB index 2 and 3 are narrow-beam SSBs.

In detail, the UE 502 detects the SSBs with SSB indexes 1, 4 and 7 from the base station 504, and measures the received signal strengths of the SSBs with SSB indexes 1, 4 and 7. Then, the UE 502 determines that the SSBs with SSB indexes 1 and 4 have highest received signal strengths. Therefore, the UE 502 selects the SSBs with SSB indexes 1 and 4, and transmits information of the SSBs with SSB indexes 1 and 4 to the base station 504 via the PRACH. In some embodiments, the received signal strengths may be the RSRP, but the present disclosure is not limited thereto. The SSBs with SSB indexes 1 and 4 may, for example, respectively correspond to a wide beam SSB1 and a wide beam SSB4 in FIG. 5B. The SSB with SSB index 7 may, for example, correspond to a wide beam SSB7 in FIG. 5B.

When the base station 504 receives the information of the SSBs with SSB indexes 1 and 4, the base station 504 transmits the SSBs with SSB indexes 2 and 3 to the UE 502. The SSB with SSB index 2 corresponds to a narrow beam SSB2 in FIG. 5B. The SSB with SSB index 3 corresponds to a narrow beam SSB3 in FIG. 5B. In some embodiments of FIG. 5B, the beam directions of the narrow beams SSB2 and SSB3 are between the beam directions of the wide beams SSB1 and SSB4. Afterwards, in FIG. 5A, the UE 502 detects the SSBs with SSB indexes 2 and 3, and measures received signal strengths of the SSBs with SSB indexes 2 and 3.

Then, the UE 502 determines that the SSB with SSB index 3 has highest received signal strength, thus the UE 502 selects the SSB with SSB index 3, and transmits information of the SSB with SSB index 3 to the base station 504. After the base station 504 receives the information of the SSB with SSB index 3, the base station 504 configures the UE 502, so that the UE 502 performs an initial access to the base station 504 through the SSB with SSB index 3. In some embodiments, the threshold may be, for example, -90dBm, but the present disclosure is not limited thereto. In some embodiments of FIG. 5A and FIG. 5B, the UE 502 only needs to measure the received signal strengths of the wide beam SSB1 (SSB index 1), the wide beam SSB4 (SSB index 4), the wide beam SSB7 (SSB index 7), the narrow beam SSB2 (SSB index 2), and the narrow beam SSB3 (SSB index 3), and ignores other SSBs transmitted by the base station 504 (such as SSB index 5 and SSB index 6), which can effectively save the time for the UE 502 and the base station 504 to perform the initial access, and also effectively reduce the power consumption of the UE 502.

Combining some embodiments of FIG. 4, FIG. 5A, and FIG. 5B, the method for beam searching of the present disclosure includes the following steps. A plurality of SSBs are detected transmitted by a base station. Each SSB corresponds to different beam directions, and the beam width of each SSB may be the same, or it may be different. The received signal strength of each SSB is measured. At least one of the SSBs is selected according to at least one of the received signal strength and the beam width. The PRACH is used to transmit information of said SSB to the base station. The initial access to the base station is performed through said SSB.

The present disclosure further provides a non-transitory computer readable medium. The non-transitory computer readable medium stores one or more instructions for execution by one or more processors of a UE in network connection with a base station. The one or more instructions include the following actions. A reconnection of the UE to a first base station is performed. A cell ID and a SSB of a previous network connection with a previously connected base station is read. Information of the cell ID and the SSB is transmitted to the first base station via a PRACH. An Initial access to the first base station is performed by the UE through the cell ID and the SSB in response to the cell ID in the PRACH received by the first base station matching a preset cell ID configured by the previously connected base station.

In some embodiments, in response to the cell ID in the PRACH not matching the preset cell ID configured by the previously connected base station, the one or more instructions include the following actions. A plurality of updated SSBs transmitted by a second base station are detected. A received signal strength of the updated SSBs is measured in sequence. It is determined that a received signal strength of one updated SSB among the plurality of updated SSBs is higher than a threshold. Information of the one updated SSB is transmitted to the second base station via the PRACH. The initial access to the second base station is performed through the one updated SSB.

In some embodiments, in response to measuring the received signal strength of the one updated SSB among the plurality of updated SSBs in sequence and determining that the received signal strength of the one updated SSB is higher than the threshold, the one or more instructions include the following action. It is immediately determined that the received signal strength of the one updated SSB is higher than the threshold without measuring remaining updated SSBs among the plurality of updated SSBs.

In some embodiments, in response to the cell ID in the PRACH not matching the preset cell ID configured by the previously connected base station, the one or more instructions include the following actions. A plurality of wide-beam SSBs transmitted by a second base station are detected. The received signal strength of each wide-beam SSB is measured. Two of the wide-beam SSBs with the highest received signal strengths are selected. The PRACH is used to transmit information of the two wide-beam SSBs with the highest received signal strengths to the second base station. A plurality of narrow-beam SSBs transmitted by the second base station are detected. Beam directions corresponding to the narrow-beam SSBs are between beam directions corresponding to the two wide-beam SSBs. The received signal strength of each narrow-beam SSB is measured. One of the narrow-beam SSBs with the highest received signal strength is selected. The PRACH is used to transmit information of said narrow-beam SSB with the highest received signal strength to the second base station. The initial access to the second base station is performed through said narrow-beam SSB.

In some embodiments, the received signal strength includes the RSRP. The threshold is the minimum receiver sensitivity of the UE.

## Claims

1. A method for beam searching, suitable for a user equipment, UE, (402), wherein the UE stores a cell identity, ID, and a synchronization signal block, SSB, of a previous network connection with a previously connected base station, the method comprising:
performing a reconnection to a first base station (S100);
reading the cell ID and the SSB of the previous network connection with the previously connected base station (S102);
transmitting information of the cell ID and the SSB to the first base station via a physical random access channel, PRACH, (S104); and
performing an initial access to the first base station through the cell ID and the SSB by the UE (S108) in response to the cell ID in the PRACH received by the first base station matching a preset cell ID configured by the previously connected base station (S106).

2. The method of claim 1, further comprising:
detecting a plurality of updated SSBs transmitted by a second base station (S200) in response to the cell ID in the PRACH not matching the preset cell ID configured by the previously connected base station (S106);
measuring a received signal strength of the plurality of updated SSBs in sequence;
determining that a received signal strength of one updated SSB among the plurality of updated SSBs is higher than a threshold (S202);
transmitting, via the PRACH, information of the one updated SSB among the plurality of updated SSBs to the second base station (S204); and
performing the initial access to the second base station through the one updated SSB among the plurality of updated SSBs (S206).

3. The method of claim 2, wherein the steps of determining that the received signal strength of the one updated SSB among the plurality of updated SSBs is higher than the threshold comprises: in response to measuring the received signal strength of the one updated SSB among the plurality of updated SSBs in sequence and determining that the received signal strength of the one updated SSB is higher than the threshold, immediately determining that the received signal strength of the one updated SSB is higher than the threshold, without measuring remaining updated SSBs among the plurality of updated SSBs.

4. The method of claim 1, further comprising:
detecting a plurality of wide-beam SSBs transmitted by a second base station (S300) in response to the cell ID in the PRACH not matching the preset cell ID configured by the previously connected base station (S106);
measuring received signal strength of each wide-beam SSBs among the plurality of wide-beam SSBs (S300);
selecting two wide-beam SSBs among the plurality of wide-beam SSBs with highest received signal strengths (S302);
transmitting, via the PRACH, information of the two wide-beam SSBs among the plurality of wide-beam SSBs with the highest received signal strengths to the second base station (S302);
detecting a plurality of narrow-beam SSBs transmitted by the second base station; wherein beam directions of the plurality of narrow-beam SSBs are located between beam directions of the two wide-beam SSBs among the plurality of wide-beam SSBs (S304);
measuring a received signal strength of each narrow-beam SSBs among the plurality of narrow-beam SSBs (S304);
selecting one narrow-beam SSB among the plurality of narrow-beam SSBs with a highest received signal strength (S306);
transmitting, via the PRACH, information of the one narrow-beam SSB among the plurality of narrow-beam SSBs with the highest received signal strength to the second base station (S306); and
performing the initial access to the second base station through the one narrow-beam SSB among the plurality of narrow-beam SSBs (S308).

5. The method of any one of claims 2-4, wherein the received signal strength comprises a reference signal received power, RSRP.

6. The method of claim 2 or 3, wherein the threshold is a minimum receiver sensitivity of the UE.

7. A method for beam searching, suitable for a user equipment, UE, comprising:
detecting a plurality of synchronization signal blocks, SSBs, transmitted by a base station; wherein the plurality of SSBs respectively correspond to different beam directions, and a beam width of each SSB in the plurality of SSBs is the same or different;
measuring received signal strength of the plurality of SSBs;
selecting at least one SSB among the plurality of SSBs according to at least one of the received signal strength and the beam width;
transmitting, via a physical random access channel, PRACH, information of the at least one SSB among the plurality of SSBs to the base station; and
performing an initial access to the base station through the at least one SSB among the plurality of SSBs.

8. The method of claim 7, wherein the steps of measuring the received signal strength of the plurality of SSBs, selecting the at least one SSB among the plurality of SSBs according to the at least one of the received signal strength and the beam width, transmitting the information of the at least one SSB among the plurality of SSBs to the base station via the PRACH, and performing the initial access to the base station through the at least one SSB among the plurality of SSBs comprises:
measuring the received signal strength of the plurality of SSBs in sequence;
determining that the received signal strength of one SSB among the plurality of SSBs is higher than a threshold;
transmitting, via the PRACH, information of the one SSB among the plurality of SSBs to the base station; and
performing the initial access to the base station through the one SSB of the plurality of SSBs.

9. The method of claim 8, wherein the steps of determining that the received signal strength of the one SSB among the plurality of SSBs is higher than the threshold comprises:
in response to measuring the received signal strength of the one SSB among the plurality of SSBs in sequence and determining that the received signal strength of the one SSB is higher than the threshold, immediately determining that the received signal strength of the one SSB is higher than the threshold, without measuring remaining SSBs among the plurality of SSBs.

10. The method of claim 7, wherein the steps of measuring the received signal strength of the plurality of SSBs, selecting the at least one SSB among the plurality of SSBs according to the at least one of the received signal strength and the beam width, transmitting the information of the at least one SSB among the plurality of SSBs to the base station via the PRACH, and performing the initial access to the base station through the at least one SSB among the plurality of SSBs comprises:
measuring received signal strength of each wide-beam SSBs among a plurality of wide-beam SSBs;
selecting two wide-beam SSBs among the plurality of wide-beam SSBs with the highest received signal strengths;
transmitting, via the PRACH, information of the two wide-beam SSBs among the plurality of wide-beam SSBs with the highest received signal strengths to the base station;
detecting a plurality of narrow-beam SSBs transmitted by the base station; wherein beam directions of the plurality of narrow-beam SSBs are located between beam directions of the two wide-beam SSBs among the plurality of wide-beam SSBs;
measuring received signal strength of each narrow-beam SSBs among the plurality of narrow-beam SSBs;
selecting one narrow-beam SSB among the plurality of narrow-beam SSBs with the highest received signal strength;
transmitting, via the PRACH, information of the one narrow-beam SSB among the plurality of narrow -beam SSBs with the highest received signal strength to the base station; and
performing the initial access to the base station through the one narrow-beam SSB among the plurality of narrow-beam SSBs.

11. The method of any one of claims 7-10, wherein the received signal strength comprises a reference signal received power, RSRP.

12. The method of claim 8 or 9, wherein the threshold is a minimum receiver sensitivity of the UE.

13. A non-transitory computer readable medium storing one or more instructions for execution by one or more processors of a user equipment, UE, in network connection with a base station, the one or more instructions comprising:
performing a reconnection of the UE to a first base station (S 100);
reading a cell ID and a synchronization signal block, SSB, of a previous network connection with a previously connected base station (S102);
transmitting information of the cell ID and the SSB to the first base station via a physical random access channel, PRACH (S104); and
performing an initial access to the first base station through the cell ID and the SSB by the UE (S108) in response to the cell ID in the PRACH received by the first base station matching a preset cell ID configured by the previously connected base station (S106).

14. The non-transitory computer readable medium of claim 13, wherein in response to the cell ID in the PRACH not matching the preset cell ID configured by the previously connected base station (S 106), the one or more instructions comprise:
detecting a plurality of updated SSBs transmitted by a second base station (S200);
measuring a received signal strength of the plurality of updated SSBs in sequence;
determining that a received signal strength of one updated SSB among the plurality of updated SSBs is higher than a threshold (S202);
transmitting, via the PRACH, information of the one updated SSB among the plurality of updated SSBs to the second base station (S204); and
performing the initial access to the second base station through the one updated SSB among the plurality of updated SSBs (S206).

15. The non-transitory computer readable medium of claim 13, wherein in response to the cell ID in the PRACH not matching the preset cell ID configured by the previously connected base station (S 106), the one or more instructions comprise:
detecting a plurality of wide-beam SSBs transmitted by a second base station (S300);
measuring received signal strength of each wide-beam SSBs among the plurality of wide-beam SSBs (S300);
selecting two wide-beam SSBs among the plurality of wide-beam SSBs with highest received signal strengths (S302);
transmitting, via the PRACH information of the two wide-beam SSBs among the plurality of wide-beam SSBs with the highest received signal strengths to the second base station (S302);
detecting a plurality of narrow-beam SSBs transmitted by the second base station; wherein beam directions of the plurality of narrow-beam SSBs are located between beam directions of the two wide-beam SSBs among the plurality of wide-beam SSBs (S304);
measuring received signal strength of each narrow-beam SSBs among the plurality of narrow-beam SSBs (S304);
selecting one narrow-beam SSB among the plurality of narrow-beam SSBs with a highest received signal strength (S306);
transmitting, via the PRACH, information of the one narrow-beam SSB among the plurality of narrow-beam SSBs with the highest received signal strength to the second base station (S306); and
performing the initial access to the second base station through the one narrow-beam SSB among the plurality of narrow-beam SSBs (S308).
